# NEUE EUROPÄISCHE PATENTSCHRIFT

(11) **EP 2 085 632 B2**
(45) Veröffentlichungstag und Bekanntmachung des Hinweises auf die Entscheidung über den Einspruch: **20.07.2016**
(45) Hinweis auf die Patenterteilung: 03.07.2013
(21) Anmeldenummer: 09150546.1
(22) Anmeldetag: 14.01.2009
(51) Int. Cl.: F16D 21/06

(54) **Doppelkupplungsanordnung**
Dual clutch system
Agencement d'embrayage double

(30) Priorität: 01.02.2008 DE 102008008062
(43) Veröffentlichungstag der Anmeldung: 05.08.2009
(73) Patentinhaber: GETRAG Getriebe- und Zahnradfabrik Hermann Hagenmeyer GmbH & Cie KG, 74199 Untergruppenbach (DE)
(72) Erfinder: Fronius, Kuno, 74348, Lauffen (DE); Hasenkamp, Jan, 74223, Flein (DE); Gaggia, Salvatore, 70469, Stuttgart-Feuerbach (DE)
(74) Vertreter: Witte, Weller & Partner Patentanwälte mbB

(56) Entgegenhaltungen:
- EP-A- 1 813 832
- EP-A- 1 818 557
- WO-A-03/006840
- WO-A-2007/051627
- WO-A1-03/006840
- DE-A1- 10 004 190
- DE-A1-102006 014 562

## Beschreibung

Die vorliegende Erfindung betrifft eine Doppelkupplungsanordnung für ein Doppelkupplungsgetriebe für Kraftfahrzeuge, mit einer ersten und einer zweiten Reibkupplung, die ein gemeinsames Eingangsglied und jeweils ein Ausgangsglied aufweisen, wobei das Ausgangsglied der ersten Reibkupplung mit einer ersten Welle verbunden ist und wobei das Ausgangsglied der zweiten Reibkupplung mit einer zweiten Welle verbunden ist, die als Hohlwelle konzentrisch um die erste Welle herum ausgebildet ist, wobei die erste und die zweite Reibkupplung radial ineinander verschachtelt sind. Eine derartige Doppelkupplungsanordnung ist bekannt aus dem Dokument DE 10 2004 061 020 A1,wobei eine Schwingungsdämpferanordnung zum Dämpfen von unerwünschten Schwingungen radial außerhalb der Reibkupplungen angeordnet ist.

Doppelkupplungsgetriebe sind allgemein bekannt. Sie beinhalten eine Doppelkupplungsanordnung mit zwei Reibkupplungen und ein Stufengetriebe mit zwei parallelen Teilgetrieben. Einem Zweig mit einer ersten Reibkupplung und einem ersten Teilgetriebe sind die ungeraden Gangstufen zugeordnet. Dem anderen Zweig mit der zweiten Reibkupplung und dem zweiten Teilgetriebe sind die geraden Gangstufen zugeordnet Eingangsseitig sind die Reibkupplungen miteinem Antriebsmotor verbunden, beispielsweise einem Verbrennungsmotor, einer Hybridantriebseinheit oder Ähnlichem. Die Teilgetriebe sind in der Regel als Stimradgetriebe realisiert. Die Verbindung der Reibkupplungsanordnung mit den Teilgetrieben erfolgt über eine Wellenanordnung mit einer Innenwelle und einer konzentrisch hierzu angeordneten Hohlwelle.

Durch überschneidende Betätigung der zwei Reibkupplungen können Gangwechsel ohne Zugkraftunterbrechung durchgeführt werden. Die Betätigung der Reibkupplungen erfolgt automatisiert. Die hierzu verwendeten Aktuatoren können hydraulische oder elektrische Aktuatoren sein.

Bei der Doppelkupplungsanordnung, die aus dem oben genannten Dokument DE 10 2004 061 020 A1 bekannt geworden ist, ist das Eingangsglied der Reibkupplungen an dem Gehäuse gelagert und umschließt dabei einen Raum, über den Kühl- und Schmieröl abgeführt wird. Die Reibkupplungen sind als nasslaufende Lamellenkupptungen ausgebildet. Die Schwingungsdämpferanordnung ist radial außerhalb der Reibkupplungen angeordnet und ebenfalls nasslaufend ausgebildet.

Ähnliche Doppelkupplungsanordnungen sind auch bekannt aus den Dokumenten DE 10 2006 010 707 A1 und EP 1 610 020 A1, wobei in dem erstgenannten Dokument keine Schwingungsdämpferanordnung vorgesehen ist, und wobei in dem zweiten Dokument eine Schwingungsdämpferanordnung außerhalb des Kupplungsgehäuses und somit trockenlaufend angeordnet ist.

Ferner ist aus dem Dokument DE 2006 014 562 A1 eine Doppelkupplungsanordnung bekannt, bei der die Reibkupplungen radial ineinander verschachtelt sind und eine Schwingungsdämpferanordnung in axialer Richtung vor den Reibkupplungen angeordnet ist. Ein gemeinsames Eingangsglied der zwei Reibkupplungen ist an der zweiten Welle gelagert, wobei sich ein Wellenabschnitt des Eingsngsgliedes in axialer Richtung nach hinten erstreckt. Insgesamt baut die aus dem Dokument DE 10 2006 014 562 A1 bekannte Doppelkupplungsanordnung in axialer Richtung sehr groß. Dies liegt auch daran, dass das Eingangsglied der Reibkupplungen mit einem so genannten Sekundärteil verbunden ist, das sich um die Schwingungsdämpferanordnung herum in axialer Richtung nach vorne erstreckt, um die Reibkupplungen an einem vorderen Gehäuseteil zusätzlich lagern zu können.

Eine gattungsgemäße Doppelkupplungsanordnung ist aus WO-A-63/006840 bekannt.

Eine weitere gattungsgemäße Doppelkupplungsanordnung ist in dem Dokument DE 100 04 190 A1 offenbart.

Für den Einbau derartiger Einfügnung Doppelkupplungsanordnungen in Front-Quer-Antriebssträngen ist eine axial kompakte Bauweise von hoher Bedeutung.

Es ist demgemäß die Aufgabe der Erfindung, eine verbesserte, insbesondere axial kurz bauende Doppeikupplungsanordnung für ein Doppelkupplungsgetriebe zur Verfügung zu stellen.

Diese Aufgabe wird durch eine Doppelkupplungsanordnung gemäß Anspruch 1 gelöst, wobei das Eingangsglied an der zweiten Welle radial gelagert ist.

Die erfindungsgemäße Doppelkupplungsanordnung kann axial sehr kurz bauend konstruiert werden. Zum einen sind die zwei Reibkupplungen radial ineinander verschachtelt, also nicht axial nebeneinanderliegend angeordnet. Zum zweiten ist das Eingangsglied an der zweiten Welle radial gelagert. Auch dies ermöglicht eine axial kompakte Bauweise.

Die Aufgabe wird somit vollkommen gelöst.

Von besonderem Vorteil ist es, wenn eine Schwingungsdämpferanordnung zum Dämpfen von unerwünschten Schwingungen radial außerhalb der Reibkupplungen angeordnet ist.

Hierbei ist die Schwingungsdämpferanordnung innerhalb eines Gehäuses der Doppelkupplungsanordnung vorgesehen, so dass außerhalb des Gehäuses nicht notwendigerweise eine weiten Schwingungsdämpferanordnung (wie beispielsweise ein Zwelmassenschwungrad) vorgesehen sein muss.

Durch die Anordnung radial außerhalb der Reibkupplungen lässt sich in axialer Richtung zumindest eine gewisse Überschneidung mit den Reibkupplungen realisieren, so dass eine axial kurze Bauweise gefördert wird.

Von besonderem Vorteil ist es, wenn die Schwingungsdämpferanordnung axial mit den Reibkupplungen ausgerichtet ist.

Bei dieser Ausführungsform ist die Schwingungsdämpferanordnung in axialer Richtung vollständig oder weitgehend überschneidend mit den Rebkupplungen angeordnet, so dass sich eine kurze axiale Bauweise ergibt.

Gemäß einer alternativen Ausführungsform ist eine Schwingungsdämpferanordnung zum Dämpfen von unerwünschten Schwingungen seitlich neben den Reibkupplungen angeordnet.

Hierdurch kann eine radial kompakte Bauwelse erzielt werden. Ferner kann die Durchflutung der ersten Reibkupplung verbessert werden.

Gemäß einer weiteren alternativen Ausführungsform ist eine Schwingungsdämpferanordnung außerhalb eines Gehäuses der Doppelkupplungsanordnung vorgesehen.

Hierbei kann die Schwingungsdämpferanordnung belsplelsweise als Zweimassenschwugrad ausgebildet sein. Diese Ausführungsform ist bevorzugt, wenn im Bereich der Doppelkupplung starke Bauraumeinschränkungen vorhanden sind.

Erfindungsgemäß ist die Lageranordnung zur Lagerung des Eingangsgliedes an der zweiten Welle radial innerhalb der Reibkupplungen angeordnet.

Auf diese Weise kann die axiale Bauweise noch weiter verkürzt werden, insbesondere wenn auch die Schwingungsdämpferanordnung axial mit den Reibkupplungen ausgerichtet ist.

Erfindungsgemäß ist das Eingangsglied an der zweiten Welle axial gelagert. Auf diese Weise ist es möglich, das Eingangsglied als Lagerstelle für Aktuatoranordnungen zu verwenden.

Erfindungsgemäß weist eine Lageranordnung zur radialen und axialen Lagerung des Eingangsgliedes an der zweiten Welle ein einzelnes Lager auf.

Hierbei ist ein geringer Bauteilaufwand realisierbar, und damit letztlich auch eine kurze axiale Bauweise.

Insgesamt ist es ferner vorteilhaft, wenn eine Lageranordnung zur Lagerung des Eingangsgliedes an der zweiten Welle in axialer Richtung hinter dem Ausgangsglied der zweiten Reibkupplung angeordnet ist.

Bei dieser Ausführungsform kann das Eingangsglied konstruktiv vergleichsweise einfach realisiert werden.

Im vorliegenden Zusammenhang sollen die Begriffe "in axialer Richtung vorne bzw. hinten" sich auf die Antriebsseite bzw. die Abtriebsseite der Doppelkupplungsanordnung beziehen.

Bei einer alternativen Ausführungsform ist eine Lageranordnung zur Lagerung des Eingangsgliedes an der zweiten Welle in axialer Richtung zwischen den Ausgangsgliedern der Reibkupplungen angeordnet.

Bei dieser Ausführungsform kann ebenfalls eine kurze axiale Bauweise realisiert werden. Ferner kann die Lageranordnung gegebenenfalls vereinfacht werden, da sich das Eingangsglied in axialer Richtung ebenfalls zwischen den Ausgangsgliedern der Reibkupplungen erstreckt und folglich daran axial gelagert werden kann.

Gemäß einer weiteren bevorzugten Ausführungsform weist das Eingangsglied einen Radialabschnitt auf, der in axialer Richtung hinter den Reibkupplungen angeordnet ist.

Auf diese Weise ist es auf konstruktiv einfache Welse möglich, das gemeinsame Eingangsglied der Reibkupplungen mit einer radial außen liegenden Schwingungsdämpferanordnung zu verbinden.

Hierbei ist ferner von Vorteil, wenn der Radialabschnitt des Eingangsgliedes wenigstens eine Öffnung aufweist, durch die hindurch wenigstens eine Aktuatoranordnung wenigstens eine der Reibkupplungen betätigen kann.

Auf diese Weise ist es möglich, den Reibkupplungen wenigstens eine Aktuatoranordnung zuzuordnen, die in axialer Richtung hinter dem Eingangsglied angeordnet ist.

Die Aktuatoranordnungen können hydraulische oder elektrische Aktuatoranordnungen, wie z.B. elektrohydraulische, elektromechanische, elektromotorische und/oder elektromagnetische Aktuatoren, beinhalten.

Gemäß einer weiteren bevorzugten Ausführungsform ist das Eingangsglied mit einem Antriebsglied der Doppelkupplungsanordnung verbunden.

Dabei kann das Eingangsglied starr mit einem Antriebsglied der Doppelkupplungsanordnung verbunden sein. In diesem Fall kann die Doppelkupplungsanordnung auch ohne Schwingungsdämpferanordnung vorgesehen sein. Ferner ist es auch denkbar, die Ausgangsglieder der Reibkupplungen über jeweilige Schwingungsdämpferanordnungen mit den zugehörigen Wellen zu verbinden.

Besonders bevorzugt ist es jedoch, wenn das Eingangsglied über die Schwingungsdämpferanordnung mit dem Antriebsglied verbunden ist.

Auf diese Weise kann sich das Eingangsglied beispielsweise in axialer Richtung hinter den Reibkupplungen erstrecken und das Antriebsglied in axialer Richtung vor den Reibkupplungen bzw. der Schwingungsdämpferanordnung angeordnet sein.

Besonders bevorzugt ist es, wenn das Antriebsglied einen Wellenabschnitt aufweist, der sich aus einem Gehäuse der Doppelkupplungsanordnung heraus erstreckt.

Der Wellenabschnitt kann dabei mit der Antriebsseite, beispielsweise mit einer Kurbelwelle bzw. einem Schwungrad des zugehörigen Antriebsstranges verbunden sein.

Dabei ist es von besonderem Vorteil, wenn die erste Welle an dem Wellenabschnitt des Antriebsgliedes radial gelagert ist.

Dies ermöglicht ebenfalls eine axial kompakte Bauweise. Die zweite Welle kann beispielsweise an der ersten Welle gelagert sein.

Gemäß einer weiteren bevorzugten Ausführungsform weist das Antriebsglied einen Radialabschnitt auf, wobei zwischen dem Ausgangsglied der ersten Reibkupplung und dem Radialabschnitt ein erstes Axiallager angeordnet ist.

Das erste Axiallager kann dabei zur Aufnahme von Axialkräften dienen, die bei der Betätigung der ersten Reibkupplung auftreten.

Insgesamt ist es ferner bevorzugt, wenn zwischen dem Ausgangsglied der ersten Reibkupplung und einem Glied der zweiten Reibkupplung ein zweites Axiallager angeordnet ist.

Auf diese Weise kann das zweite Axiallager auch Kräfte aufnehmen, die bei der Betätigung der zweiten Reibkupplung entstehen.

Das Glied der zweiten Reibkupplung kann dabei ein fest mit dem Eingangsglied verbundenes Glied sein, wie ein Eingangslamellenträger, oder kann ein Ausgangsglied sein.

Bevorzugt ist es ferner, wenn das Ausgangsglied der ersten Reibkupplung radial innen angeordnet ist.

Dies ermöglicht ebenfalls eine axial kompakte Bauweise.

Im vorliegenden Zusammenhang soll die Anordnung des Ausgangsgliedes radial innen oder außen sich jeweils auf die relative Anordnung des entsprechenden Eingangsgliedabschnittes der jeweiligen Reibkupplung beziehen. Beispielsweise kann bei einer Lamellenkupplung ein radial innen liegendes Ausgangsglied ein Innenlamellenträger sein.

Gemäß einer alternativen Ausführungsform ist das Ausgangsglied der ersten Reibkupplung radial außen angeordnet.

Ferner ist es insgesamt bevorzugt, wenn das Ausgangsglied der zweiten Reibkupplung radial innen angeordnet ist.

Alternativ hierzu kann das Ausgangsglied der zweiten Reibkupplung auch radial außen angeordnet sein.

Insgesamt ist es vorteilhaft, wenn die erste Reibkupplung radial außerhalb der zweiten Reibkupplung angeordnet ist und/oder wenn die Reibkupplungen als nasslaufende Reibkupplungen ausgebildet sind.

Die Anordnung der Schwingungsdämpferanordnung innerhalb des Gehäuses der Doppelkupplungsanordnung bedeutet vorzugsweise, dass auch die Schwingungsdämpferanordnung nasslaufend ausgebildet ist.

Mit wenigstens einer der oben beschriebenen Ausführungsformen lässt sich eine Doppelkupplungsanordnung realisieren, die für den Einbau in Front-Quer-Antriebssträge von Kraftfahrzeugen geeignet ist. Aufgrund der Verwendung von nasslaufenden Reibkupplungen können vergleichsweise hohe Drehmomente übertragen werden.

Die Anordnung des Schwingungsdämpfers radial außerhalb der oder seitlich neben den Reibkupplungen ermöglicht ggf. einen besseren Schutz des Schwingungsdämpfers. Insgesamt lässt sich ein integriertes Design der Reibkupplungen und der Schwingungsdämpferanordnung realisieren. Auch kann die Anzahl der Bauteile verringert werden, insbesondere die Anzahl der Axiallager und/oder axiale Befestigungselemente der Reibkupplung(en).

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: einen Antriebsstrang für ein Kraftfahrzeug mit einer ersten Ausführungsform einer erfindungsgemäßen Doppelkupplungsanordnung;
- Fig. 2: eine alternative Ausführungsform einer erfindungsgemäßen Doppelkupplungsanordnung;
- Fig.3: eine weitere alternative Ausführungsform einer erfindungsgemäßen Doppelkupplungsanordnung;
- Fig. 4: eine weitere alternative Ausführungsform einer erfindungsgemäßen Doppelkupplungsanordnung;
- Fig. 5: eine weitere alternative Ausführungsform einer erfindungsgemäßen Doppelkupplungsanordnung;
- Fig. 6: eine weitere alternative Ausführungsform einer erfindungsgemäßen Doppelkupplungsanordnung;
- Fig. 7: eine weitere alternative Ausführungsform einer erfindungsgemäßen Doppelkupplungsanordnung;
- Fig.8: eine weitere alternative Ausführungsform einer erfindungsgemäßen Doppelkupplungsanordnung;
- Fig.9: eine weitere alternative Ausführungsform einer erfindungsgemäßen Doppelkupplungsanordnung; und
- Fig. 10: eine weitere alternative Ausführungsform einer erfindungsgemäßen Doppelkupplungsanordnung.

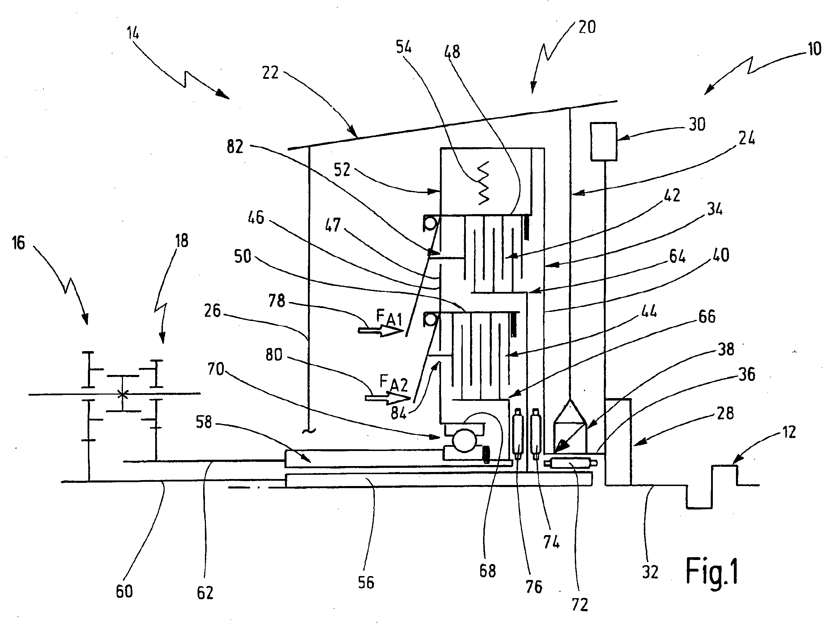

In Fig. 1 ist ein Antriebsstrang für ein Kraftfahrzeug schematisch dargestellt und generell mit 10 bezeichnet. Der Antriebsstrang 10 ist als axial kurz bauender Antriebsstrang insbesonderefürden Front-Quer-Einbau ausgelegt.

Der Antriebsstrang 10 beinhaltet einen Antriebsmotor 12, wie einen Verbrennungsmotor oder eine Hybridantriebseinheit sowie ein Doppelkupplungsgetriebe 14. Das Doppelkupplungsgetriebe 14 weist in an sich bekannter Form ein erstes Teilgetriebe 16 und ein zweites Teilgetriebe 18 auf. Die Teilgetriebe 16, 18 sind in Fig. 1 lediglich schematisiert in Form eines jeweiligen Radsatzes dargestellt. Ferner beinhaltet das Doppelkupplungsgetriebe 14 eine Doppelkupplungsanordnung 20.

Die Doppelkupplungsanordnung 20 weist ein Gehäuse 22 miteiner ersten Gehäusewand 24 und einer zweiten Gehäusewand 26 auf. Die erste Gehäusewand 24 ist eine vordere Gehäusewand benachbart zu dem Antriebsmotor 12. Die zweite Gehäusewand 26 ist eine hintere Gehäusewand benachbart zu den Teilgetrieben 16, 18.

Der Antriebsmotor 12 ist mit einem außerhalb des Gehäuses 22 gelagerten Schwungrad 28 verbunden, das an seinem Außenumfang eine Anlasserverzahnung 30 beinhaltet. Die Kurbelwelle des Antriebsmotors 12 ist bei 32 gezeigt und fest mit dem Schwungrad 28 verbunden.

Die Doppelkupplungsanordnung 20 weist ein Antriebsglied 34 auf, das einen Wellenabschnitt 36 beinhaltet. Der Wellenabschnitt 36 erstreckt sich durch die erste Gehäusewand 22 hindurch und ist fest mit dem Schwungrad 28 verbunden. Am Außenumfang ist der Wellenabschnitt 36 über eine Wellendichtung 38 gegenüber dem Gehäuse 22 abgedichtet.

Das Antriebsglied 34 weist ferner einen Radialabschnitt 40 auf, der sich ausgehend von dem Wellenabschnitt 36 im Inneren des Gehäuses 22 nach radial außen erstreckt.

Die Doppelkupplungsanordnung 20 beinhaltet ferner eine erste Reibkupplung 42 und eine zweite Reibkupplung 44, die radial ineinander verschachtelt angeordnet sind. Die Reibkupplungen 42, 44 können jeweils als Lamellenkupplungen, insbesondere als nasslaufende Lamellenkupplungen, ausgebildet sein. Die erste Reibkupplung 42 ist radial außerhalb der zweiten Reibkupplung 44 angeordnet, und zwar konzentrisch hierzu.

Die Reibkupplungen 42, 44 weisen ein gemeinsames Eingangsglied 46 auf, das einen sich generell radial erstreckenden Radialabschnitt 47 aufweist und hinter den Reibkupplungen 42, 44 angeordnet ist. Die erste Reibkupplung 42 weist einen ersten Eingangslamellenträger 48 auf, der starr mit dem Eingangsglied 46 verbunden ist. Die zweite Reibkupplung 44 weist einen zweiten Eingangslamellenträger 50 auf, der ebenfalls starr mit dem Eingangsglied 46 verbunden ist.

Das Eingangsglied 46 ist mit dem Antriebsglied 34 über eine Schwingungsdämpferanordnung 52 verbunden, die radial außerhalb der ersten Reibkupplung 42 und axial ausgerichtet hiermit angeordnet ist. Die Schwingungsdämpferanordnung 52 weist in an sich bekannter Weise Federmittel 54 auf, die dazu ausgelegt sind, unerwünschte Schwingungen zu dämpfen, die beispielsweise von dem Antriebsmotor 12 erzeugt werden. Die Schwingungsdämpferanordnung 52 kann in ebenfalls an sich bekannter Weise auch weitere Funktionen beinhalten.

Die Doppelkupplungsanordnung 20 beinhaltet ferner eine erste Welle 56, die als Innenwelle ausgebildet ist, und eine zweite Welle 58, die als Hohlwelle konzentrisch um die erste Welle 56 herum angeordnet ist. Die erste Welle 56 ist mit einer ersten Getriebeeingangswelle 60 des ersten Teilgetriebes 16 verbunden. Die zweite Welle 58 ist mit einer zweiten Getriebeeingangswelle 62 des zweiten Teilgetriebes 18 verbunden.

Eine gemeinsame Ausgangswelle der Teilgetriebe 16,18 kann in an sich bekannter Weise mit einem mechanischen Differential, insbesondere einem Vorderachsdifferential und/oder einer Torque-Vectoring-Anordnung bzw. einer Twin-Kupplung verbunden sein, um die Räder im Bereich der Vorderachse anzutreiben.

Die erste Reibkupplung 42 weist ein erstes Ausgangsglied in Form eines ersten Ausgangslamellenträgers 64 auf. Die zweite Reibkupplung 44 weist ein zweites Ausgangsglied in Form eines zweiten Ausgangslamellenträgers 66 auf.

Bei der Doppelkupplungsanordnung der Fig. 1 sind die Eingangslamellenträger 48, 50 als Außenlamellenträger ausgebildet, und die Ausgangslamellenträger 64, 66 sind als Innenlamellenträger ausgebildet. Der erste Ausgangslamellenträger 64 ist über einen Radialabschnitt mit der ersten Welle 56 verbunden. Der zweite Ausgangslamellenträger 66 ist über einen Radialabschnitt mit der zweiten Welle 58 verbunden.

Das Eingangsglied 46 weist einen sich axial erstreckenden Wellenstummel 68 auf. Der Wellenstummel 68 erstreckt sich ausgehend von dem Radialabschnitt 47 des Eingangsgliedes 46 nach vorne, und zwar so, dass der Wellenstummel 68 im Wesentlichen radial innerhalb der zweiten Reibkupplung 44 angeordnet ist.

Über den Wellenstummel 68 ist die Doppelkupplungsanordnung 20 axial an der zweiten Welle 58 gelagert, und zwar über eine Lageranordnung 70.

Die Lageranordnung 70 ist als kombiniertes Axial-/Radiallager ausgebildet und dazu ausgelegt, sowohl die Doppelkupplungsanordnung 20 radial zu lagern als auch Axialkräfte aufzunehmen, die in das Eingangsglied 46 eingeleitet werden.

Insgesamt ergibt sich eine besonders kompakte axiale Bauweise, da sowohl die Schwingungsdämpferanordnung 52 als auch die Lageranordnung 70 in axialer Richtung mit den Reibkupplungen 42,44 ausgerichtet sind.

Der Wellenabschnitt 36 des Antriebsgliedes 34 ist über ein Radiallager 72 an der ersten Welle 56 gelagert, und zwar vorzugsweise axial gesehen im Bereich der Wellendichtung 38. Die erste Welle 56 erstreckt sich zu diesem Zweck in axialer Richtung nach hinten über jenen Abschnitt hinaus, bei dem der erste Ausgangslamellenträger 64 mit der ersten Welle 56 verbunden ist.

Zwischen dem Antriebsglied 34 und einem Radialabschnitt des ersten Ausgangslamellenträgers 64 ist ein erstes Axiallager 74 vorgesehen. Zwischen einem Radialabschnitt des ersten Ausgangslamellenträgers 64 und einem Radialabschnitt des zweiten Ausgangslamellenträgers 66 ist ein zweites Axiallager 76 vorgesehen.

Die Axiallager 74, 76 dienen dazu, Kräfte aufzunehmen, die durch die Betätigung der Reibkupplungen 42,44 entstehen. Da das Antriebsglied 34 starr mit dem ohnehin axial gelagerten Schwungrad 28 verbunden ist, können die Axialkräfte folglich in ein Axiallager des Rades 28 eingeleitetwerden, das in Fig. 1 jedoch aus Übersichtsgründen nicht dargestellt ist.

Zur Betätigung der Reibkupplungen 42, 44 sind eine erste Aktuatoranordnung 78 und eine zweite Aktuatoranordnung 80 vorgesehen, die jeweilige Kräfte F_{A1} bzw. F_{A2} auf die Lamellen der Reibkupplungen 42,44 in axialer Richtung ausüben können. Die Aktuatoranordnungen 78, 70 sind in Fig. 1 lediglich schematisiert dargestellt, sind jedoch in axialer Richtung gesehen hinter den zwei Reibkupplungen 42, 44 und hinter dem Eingangsglied 46 angeordnet, vorzugsweise innerhalb des Gehäuses 22. Die Aktuatoranordnungen 78, 80 können hydraulische oder elektrische Aktuatoranordnungen sein, insbesondere elektrohydraulische, elektromotorische oder elektromagnetische Aktuatoranordnungen.

Das Eingangsglied 46 weist eine erste Öffnung 82 auf, durch die hindurch die erste Aktuatoranordnung 78 die erste Reibkupplung 42 betätigen kann. Ferner weist das Eingangsglied 46 eine zweite Öffnung 84 auf, durch die hindurch die zweite Aktuatoranordnung 80 die zweite Reibkupplung 44 betätigen kann.

Es versteht sich, dass die Reibkupplungen 42, 44 insbesondere als nasslaufende Lamellenkupplungen ausgebildet sind. Die zugehörige Fluidversorgung zu Schmier- und Kühlzwecken ist in Fig. 1 aus Gründen einer übersichtlicheren Darstellung nicht gezeigt. Das typischerweise von radial innen abgegebene Schmierfluid wird durch die Zentrifugalkräfte durch die Reibkupplungen 44, 42 hindurchgeleitet und schließlich auch durch die Schwingungsdämpferanordnung 52 hindurch. Das Fluid wird aufgrund einer geneigten Oberseite des Gehäuses 22 nach hinten abgeführt, und zwar in einen Sumpf hinein, der in axialer Richtung zweigeteilt sein kann, um Panschverluste der Doppelkupplungsanordnung 20 zu vermeiden.

Die Aktuatoranordnungen 78, 80 können als einseitig wirkende Aktuatoranordnungen ausgebildet sein, wobei sich die Reibkupplungen 42, 44 bei Nichtbetätigung selbsttätig durch das radial nach außen strömende Schmier- bzw. Kühlfluid öffnen.

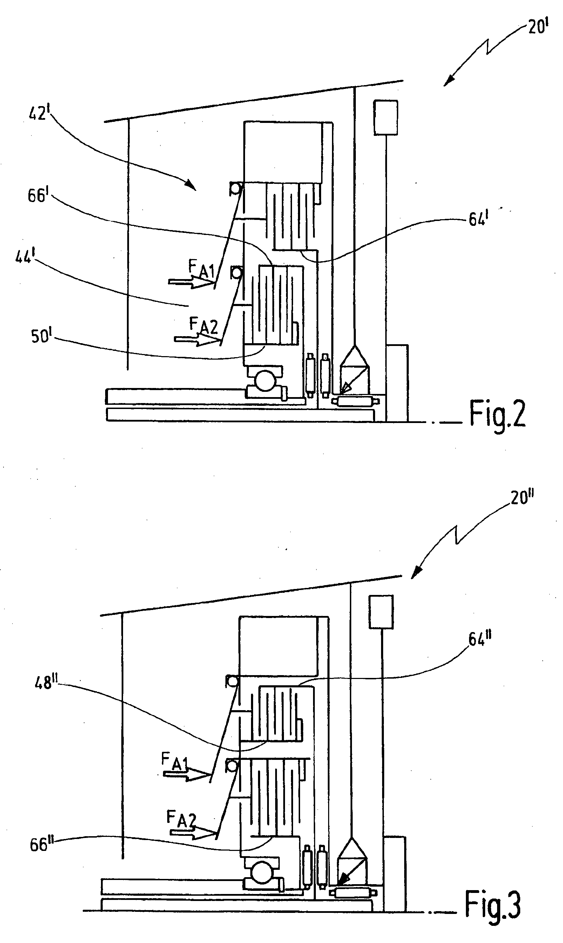

In den nachfolgenden Figuren 2 bis 6 sind alternative Ausführungsformen von erfindungsgemäßen Doppelkupplungsanordnungen 20 gezeigt. Die nachstehend beschriebenen Doppelkupplungsanordnungen sind hinsichtlich Aufbau und Funktionsweise generell identisch zu der oben in Bezug auf Fig. 1 beschriebenen Doppelkupplungsanordnung. Gleiche Elemente sind daher mit gleichen Bezugsziffern bezeichnet. Im Folgenden werden lediglich die Unterschiede erläutert.

In Fig. 2 ist eine Doppelkupplungsanordnung 20' gezeigt, bei der der zweite Eingangslamellenträger 50' als Innenlamellenträger ausgebildet ist, und bei der der zweite Ausgangslamellenträger 66' als Außenlamellenträger ausgebildet ist.

In Fig. 3 ist eine weitere Ausführungsform einer erfindungsgemäßen Doppelkupplungsanordnung 20" gezeigt, die sich von der Ausführungsform der Fig. 1 dadurch unterscheidet, dass der erste Eingangslamellenträger 48" als Innenlamellenträger und der erste Ausgangslamellenträger 64" als Außenlamellenträger ausgebildet ist.

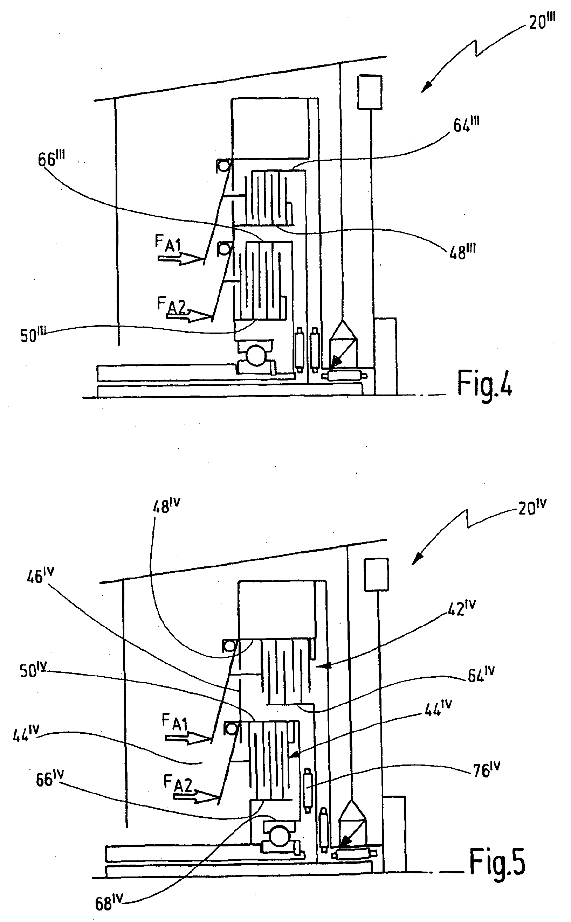

Bei der in Fig. 4 gezeigten Doppelkupplungsanordnung 20"' sind im Unterschied zu der Ausführungsform der Fig. 1 beide Eingangslamellenträger 48"', 50"' als Innenlamellenträger ausgebildet, und beide Ausgangslamellenträger 64"', 66"' sind als Außenlamellenträger ausgebildet.

In Fig. 5 ist eine weitere Doppelkupplungsanordnung 20^{iv} gezeigt, die sich von der Ausführungsform der Fig. 1 dadurch unterscheidet, dass das Eingangsglied 46^{iv} einen weiteren Radialabschnitt aufweist, der sich axial vor der zweiten Reibkupplung 44^{iv} erstreckt und mit einem Wellenstummel 68^{iv} verbunden ist. Dabei erstreckt sich der Wellenstummel 68^{iv} in axialer Richtung von dem vorne liegenden Abschnitt des Eingangsgliedes 46^{iv} nach hinten, und zwar unterdie zweite Reibkupplung 44^{iv}. Das zweite Axiallager 76^{iv} ist bei dieser Ausführungsform zwischen dem vorne liegenden Abschnitt des Eingangsgliedes 46^{iv} und dem Radialabschnitt des ersten Ausgangslamellenträgers 64^{iv} angeordnet und liegt radial etwas weiter außen als bei der Ausführungsform der Fig. 1.

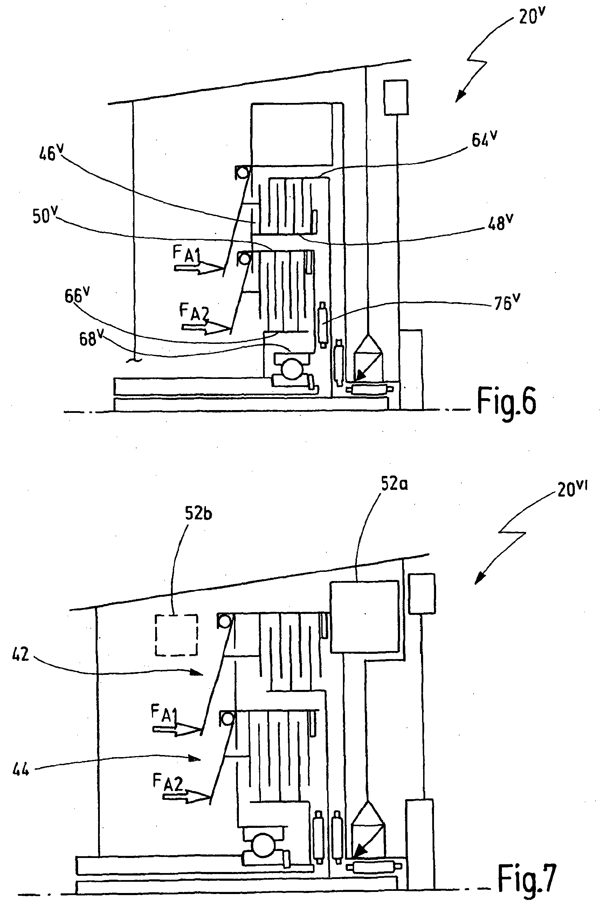

Fig. 6 zeigt eine weitere Doppelkupplungsanordnung 20^{v}, die im Wesentlichen der Doppelkupplungsanordnung 20^{iv} der Fig. 5 entspricht.

Im Unterschied zu der Doppelkupplungsanordnung 20^{iv} ist bei der Doppelkupplungsanordnung 20^{v} der erste Eingangslamellenträger 48^{v} als Innenlamellenträger ausgebildet, und der erste Ausgangslamellenträger 64^{v} ist als Außenlamellenträger ausgebildet.

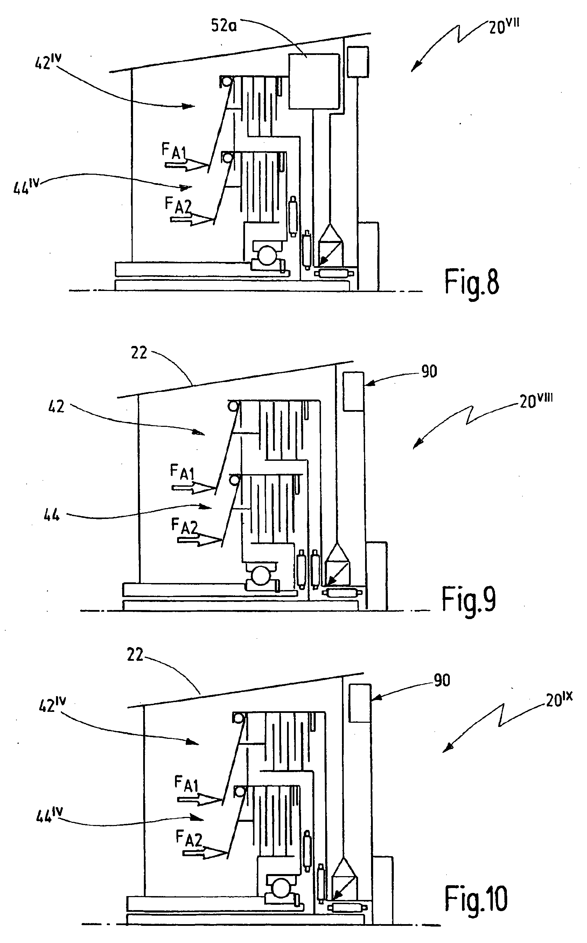

In den Figuren 7 und 8 sind alternative Ausführungsformen von Doppelkupplungsanordnungen 20^{VI} bzw. 20^{VII} gezeigt. Dabei entspricht der generelle Aufbau der Doppelkupplungsanordnung 20^{VI} der Fig. 7 der Doppelkupplungsanordnung 20 der Fig. 1, die eine erste Reibkupplung 42 und eine zweite Reibkupplung 44 beinhaltet. Bei der Doppelkupplungsanordnung 20^{VI} ist eine Schwingungsdämpferanordnung 52a jedoch nicht axial ausgerichtet mit den Reibkupplungen 42, 44 vorgesehen, sondern seitlich neben den Reibkupplungen 42, 44. Die Schwingungsdämpferanordnung 52a ist dabei zwischen einer eingangsseitigen Gehäusewand und den Reibkupplungen 42,44 vorgesehen. Alternativ ist es möglich, eine solche seitliche Schwingungsdämpferanordnung auch zwischen einer ausgangsseitigen Gehäusewand und den Reibkupplungen 42, 44 vorzusehen, also axial hinter den Reibkupplungen 42, 44, wie es schematisch bei 52b in Fig. 7 gezeigt ist.

Die seitliche Anordnung der Schwingungsdämpferanordnung 52a bzw. 52b ermöglicht eine Verringerung der radialen Abmessungen der Doppelkupplungsanordnung. Zudem kann die Durchflutung der ersten Reibkupplung 42 verbessert werden, wenn diese als nasslaufende Kupplung ausgebildet ist.

Die Doppelkupplungsanordnung 20^{VII} entspricht in ihrem grundsätzlichen Aufbau der Doppelkupplungsanordnung 20^{IV} der Fig. 5, wobei jedoch, ähnlich wie bei der Doppelkupplungsanordnung 20^{VI}, die Schwingungsdämpferanordnung 52a seitlich neben den Reibkupplungen 42^{IV}, 44^{IV} angeordnet ist. Auch bei dieser Ausführungsform kann, obgleich nichtdargestellt, die Schwingungsdämpferanordnung axial hinter den Reibkupplungen 42^{IV}, 44^{IV} angeordnet sein.

Es versteht sich, dass eine seitliche Anordnung einer Schwingungsdämpferanordnung auch bei den anderen oben beschriebenen Ausführungsformen von Doppelkupplungsanordnungen gemäß der Figuren 1 bis 6 realisiert werden kann.

In den Figuren 9 und 10 sind zwei weitere alternative Ausführungsformen von Doppelkupplungsanordnungen 20^{VIII} bzw. 20^{IX} gezeigt, bei denen eine Schwingungsdämpferanordnung 90 außerhalb eines Gehäuses 22 der jeweiligen Doppelkupplungsanordnung vorgesehen ist. Die Schwingungsdämpferanordnung 90 kann folglich als "trockene" Schwingungsdämpferanordnung ausgebildet sein, beispielsweise als Zweimassenschwungrad. Ferner kann die Schwingungsdämpferanordnung 90 einen Anlasserzahnkranz beinhalten, wie er in den Figuren 9 und 10 schematisch radial außen dargestellt ist.

Bei den Doppelkupplungsanordnungen 20^{VIII}, 20^{IX} ist innerhalb des Gehäuses 22 keine weitere Schwingungsdämpferanordnung vorgesehen. Die Doppelkupplungsanordnung 20^{VIII} entspricht ansonsten hinsichtlich des weiteren Aufbaus der Doppelkupplungsanordnung 20 der Fig. 1, die eine erste Reibkupplung 42 und eine zweite Reibkupplung 44 aufweist. In entsprechender Weise entspricht der grundlegende Aufbau der Doppelkupplungsanordnung 20^{IX} jenem der Doppelkupplungsanordnung 20^{IV} der Fig. 5, die eine erste Reibkupplung 42^{IV} und eine zweite Reibkupplung 44^{IV} aufweist.

Es versteht sich, dass die alternative Ausführungsform mit einer außerhalb des Gehäuses 22 liegenden Schwingungsdämpferanordnung auch mit den anderen oben beschriebenen Ausführungsformen der Figuren 1 bis 6 kombiniert werden kann (jeweils alternativ zu der im Gehäuse 22 angeordneten Schwingungsdämpferanordnung 52).

## Patentansprüche

1. Doppelkupplungsanordnung (20) für ein Doppelkupplungsgetriebe (14) für Kraftfahrzeuge, mit einer ersten und einer zweiten Reibkupplung (42, 44), die ein gemeinsames Eingangsglied (46) und jeweils ein Ausgangsglied (64, 66) aufweisen, wobei das Ausgangsglied (64) der ersten Reibkupplung (42) mit einer ersten Welle (56) verbunden ist und wobei das Ausgangsglied (66) der zweiten Reibkupplung (44) mit einer zweiten Welle (58) verbunden ist, die als Hohlwelle konzentrisch um die erste Welle (56) herum ausgebildet ist, wobei die erste und die zweite Reibkupplung (42, 44) radial ineinander verschachtelt sind, wobei das Eingangsglied (46) an der zweiten Welle (58) mittels einer Lageranordnung (70) radial gelagert ist,
wobei die Lageranordnung (70) zur Lagerung des Eingangsgliedes (46) an der zweiten Welle (58) radial innerhalb der Reibkupplungen (42, 44) angeordnet ist, so dass die Lageranordnung (70) axial mit den Reibkupplungen (42, 44) ausgerichtet, **dadurch gekennzeichnet, dass** das Eingangsglied (46) an der zweiten Welle (58) axial gelagert ist, wobei die Lageranordnung (70) zur radialen und axialen Lagerung des Eingangsgliedes (46) an der zweiten Welle (58) ein einzelnes Lager aufweist.

2. Doppelkupplungsanordnung nach Anspruch 1, **gekennzeichnet durch** eine Schwingungsdämpferanordnung (52) zum Dämpfen von unerwünschten Schwingungen, die radial außerhalb der Reibkupplungen (42, 44) angeordnet ist.

3. Doppelkupplungsanordnung nach Anspruch 1, **gekennzeichnet durch** eine Schwingungsdämpferanordnung (52) zum Dämpfen von unerwünschten Schwingungen, die seitlich neben den Reibkupplungen (42, 44) angeordnet ist.

4. Doppelkupplungsanordnung nach Anspruch 1, **gekennzeichnet durch** eine Schwingungsdämpferanordnung (90) außerhalb eines Gehäuses (22) der Doppelkupplungsanordnung (20).

5. Doppelkupplungsanordnung nach einem der Ansprüche 1 bis 4, **dadurch gekennzeichnet, dass** das Eingangsglied (46) einen Radialabschnitt (47) aufweist, der in axialer Richtung hinter den Reibkupplungen (42, 44) angeordnet ist.

6. Doppelkupplungsanordnung nach einem der Ansprüche 1 bis 5, **dadurch gekennzeichnet, dass** den Reibkupplungen (42, 44) wenigstens eine Aktuatoranordnung (78, 80) zugeordnet ist, die in axialer Richtung hinter dem Eingangsglied (46) angeordnet ist.

7. Doppelkupplungsanordnung nach einem der Ansprüche 1 bis 6, **dadurch gekennzeichnet, dass** das Eingangsglied (46) mit einem Antriebsglied (34) der Doppelkupplungsanordnung (20) verbunden ist.

8. Doppelkupplungsanordnung nach Anspruch 7, **dadurch gekennzeichnet, dass** das Eingangsglied (46) über eine Schwingungsdämpferanordnung (52) mit dem Antriebsglied (34) verbunden ist.

9. Doppelkupplungsanordnung nach Anspruch 7 oder 8, **dadurch gekennzeichnet, dass** das Antriebsglied (34) einen Wellenabschnitt (36) aufweist, der sich aus einem Gehäuse (22) der Doppelkupplungsanordnung (20) heraus erstreckt.

10. Doppelkupplungsanordnung nach einem der Ansprüche 7 bis 9, **dadurch gekennzeichnet, dass** das Antriebsglied (34) einen Radialabschnitt (40) aufweist, wobei zwischen dem Ausgangsglied (64) der ersten Reibkupplung (42) und dem Radialabschnitt (40) ein erstes Axiallager (74) angeordnet ist.

11. Doppelkupplungsanordnung nach einem der Ansprüche 1 bis 10, **dadurch gekennzeichnet, dass** zwischen dem Ausgangsglied (64) der ersten Reibkupplung (42) und einem Glied (66; 66'; 66"; 66"'; 50^{iv}; 50^{v}) der zweiten Reibkupplung (44) ein zweites Axiallager (76) angeordnet ist.

## Claims

1. Dual clutch arrangement (20) for a dual clutch transmission (14) for motor vehicles, having a first and a second friction clutch (42, 44), which friction clutches (42, 44) have a common input member (46) and in each case one output member (64, 66), with the output member (64) of the first friction clutch (42) being connected to a first shaft (56) and with the output member (66) of the second friction clutch (44) being connected to a second shaft (58) which is formed as a hollow shaft concentrically around the first shaft (56), with the first and the second friction clutches (42, 44) being nested radially one inside the other, wherein the input member (46) is mounted radially on the second shaft (58), by means of a bearing arrangement (70),
wherein the bearing arrangement (70) for mounting the input member (46) on the second shaft (58) is arranged radially within the friction clutches (42, 44), so that the bearing arrangement (70) is aligned axially with the friction clutches (42, 44),
**characterized in that** the input member (46) is mounted axially on the second shaft (58), wherein the bearing arrangement (70) for radially and axially mounting the input member (46) on the second shaft (58) has a single bearing (72).

2. Dual clutch arrangement according to Claim 1, **characterized by** a vibration damper arrangement (52) for damping undesired vibrations, which vibration damper arrangement (52) is arranged radially outside the friction clutches (42, 44).

3. Dual clutch arrangement according to Claim 1, **characterized by** a vibration damper arrangement (52) for damping undesired vibrations, which vibration damper arrangement (52) is arranged laterally adjacent to the friction clutches (42, 44).

4. Dual clutch arrangement according to Claim 1, **characterized by** a vibration damper arrangement (90) outside a housing (22) of the dual clutch arrangement (20).

5. Dual clutch arrangement according to one of Claims 1 to 4, **characterized in that** the input member (46) has a radial section (47) which is arranged in the axial direction behind the friction clutches (42, 44).

6. Dual clutch arrangement according to one of Claims 1 to 5, **characterized in that** the friction clutches (42, 44) are assigned at least one actuator arrangement (78, 80) which is arranged in the axial direction behind the input member (46).

7. Dual clutch arrangement according to one of Claims 1 to 6, **characterized in that** the input member (46) is connected to a drive input member (34) of the dual clutch arrangement (20).

8. Dual clutch arrangement according to Claim 7, **characterized in that** the input ember (46) is connected to the drive input member (34) via a vibration damper arrangement (52).

9. Dual clutch arrangement according to Claim 7 or 8, **characterized in that** the drive input member (34) has a shaft section (36) which extends out of a housing (22) of the dual clutch arrangement (20).

10. Dual clutch arrangement according to one of Claims 7 to 9, **characterized in that** the drive input member (34) has a radial section (40), with a first axial bearing (74) being arranged between the output member (64) of the first friction clutch (42) and the radial section (40).

11. Dual clutch arrangement according to one of Claims 1 to 10, **characterized in that** a second axial bearing (76) is arranged between the output member (64) of the first friction clutch (42) and a member (66; 66'; 66"; 66"'; 50^{IV}; 50^{V}) of the second friction clutch (44).

## Revendications

1. Agencement d'embrayage double (20) pour une transmission à embrayage double (14) pour véhicules automobiles, comprenant un premier et un deuxième embrayage à friction (42, 44), qui présentent un organe d'entrée commun (46) et un organe de sortie respectif (64, 66), l'organe de sortie (64) du premier embrayage à friction (42) étant relié à un premier arbre (56) et l'organe de sortie (66) du deuxième embrayage à friction (44) étant relié à un deuxième arbre (58), qui est réalisé sous forme d'arbre creux disposé concentriquement autour du premier arbre (56), le premier et le deuxième embrayage à friction (42, 44) étant emboîtés radialement l'un dans l'autre, l'organe d'entrée (46) étant supporté radialement sur le deuxième arbre (58) au moyen d'un agencement de palier (70),
l'agencement de palier (70) pour supporter l'organe d'entrée (46) étant disposé sur le deuxième arbre (58) radialement à l'intérieur des embrayages à friction (42, 44), de telle sorte que l'agencement de palier (70) soit orienté axialement avec les embrayages à friction (42, 44), **caractérisé en ce que** l'organe d'entrée (46) est supporté axialement sur le deuxième arbre (58), l'agencement de palier (70) pour le support radial et axial de l'organe d'entrée (46) sur le deuxième arbre (58) présentant un palier unique.

2. Agencement d'embrayage double selon la revendication 1, **caractérisé par** un agencement d'amortisseur d'oscillations (52) pour amortir les oscillations indésirables, lequel agencement d'amortisseur d'oscillations est disposé radialement à l'extérieur des embrayages à friction (42, 44).

3. Agencement d'embrayage double selon la revendication 1, **caractérisé par** un agencement d'amortisseur d'oscillations (52) pour amortir les oscillations indésirables, lequel agencement d'amortisseur d'oscillations est disposé latéralement à côté des embrayages à friction (42, 44).

4. Agencement d'embrayage double selon la revendication 1, **caractérisé par** un agencement d'amortisseur d'oscillations (90) en dehors d'un boîtier (22) de l'agencement d'embrayage double (20).

5. Agencement d'embrayage double selon l'une quelconque des revendications 1 à 4, **caractérisé en ce que** l'organe d'entrée (46) présente une portion radiale (47) qui est disposée dans la direction axiale derrière les embrayages à friction (42, 44).

6. Agencement d'embrayage double selon l'une quelconque des revendications 1 à 5, **caractérisé en ce que** les embrayages à friction (42, 44) sont associés à au moins un agencement d'actionneur (78, 80) qui est disposé dans la direction axiale derrière l'organe d'entrée (46).

7. Agencement d'embrayage double selon l'une quelconque des revendications 1 à 6, **caractérisé en ce que** l'organe d'entrée (46) est relié à un organe d'entraînement (34) de l'agencement d'embrayage double (20).

8. Agencement d'embrayage double selon la revendication 7, **caractérisé en ce que** l'organe d'entrée (46) est relié à l'organe d'entraînement (34) par le biais d'un agencement d'amortisseur d'oscillations (52).

9. Agencement d'embrayage double selon la revendication 7 ou 8, **caractérisé en ce que** l'organe d'entraînement (34) présente une portion d'arbre (36) qui s'étend hors d'un boîtier (22) de l'agencement d'embrayage double (20).

10. Agencement d'embrayage double selon l'une quelconque des revendications 7 à 9, **caractérisé en ce que** l'organe d'entraînement (34) présente une portion radiale (40), un premier palier axial (74) étant disposé entre l'organe de sortie (64) du premier embrayage à friction (42) et la portion radiale (40).

11. Agencement d'embrayage double selon l'une quelconque des revendications 1 à 10, **caractérisé en ce qu'**entre l'organe de sortie (64) du premier embrayage à friction (42) et un organe (66 ; 66' ; 66" ; 66"' ; 50^{iv} ; 50^{v}) du deuxième embrayage à friction (44) est disposé un deuxième palier axial (76).
